# EUROPEAN PATENT APPLICATION

(11) **EP 2 479 653 A1**
(43) Date of publication of application: **25.07.2012**
(21) Application number: 10826493.8
(22) Date of filing: 08.10.2010
(51) Int. Cl.: G06F 3/041, G09F 9/00

(54) **DISPLAY DEVICE WITH ATTACHED TOUCH PANEL**

(30) Priority: 27.10.2009 JP 2009246544
(71) Applicant: Sharp Kabushiki Kaisha, Osaka-shi, Osaka 545-8522 (JP)
(72) Inventor: KITABAYASHI Tadashi, Osaka 545-8522 (JP)
(74) Representative: Müller-Boré & Partner Patentanwälte
(86) International application number: PCT/JP2010/067731
(87) International publication number: WO 2011/052359

(57) **Abstract**

In a display device with an attached touch panel in which a touch electrode is provided on a front substrate of a display panel, the frame area is reduced by raising the proportion of the image display region to the overall surface area of the display device. The display device with an attached touch panel (100) (liquid crystal display device with an attached touch panel) includes a display panel (3) (liquid crystal panel) that has a back substrate (1) and a front substrate (2) stacked on the back substrate (1) such that a portion of the back substrate (1) is exposed, a driving electrode terminal (7) for connection with an external circuit being formed on the exposed portion of the back substrate (1), and a touch electrode (4) that is formed on the front substrate (2) of the display panel (3). An extension portion (11) is provided on the front substrate (2) on one side of the driving electrode terminal (7), the extension portion (11) extending toward the side of the back substrate (1) where the driving electrode terminal (7) is formed. A signal output terminal (13) for outputting a touch position signal detected by the touch electrode (4) to the external circuit is provided on the extension portion (11).

## Description

### Technical Field

The present invention relates to a display device with an attached touch panel configured including a display panel for displaying images and the like and a touch electrode formed on a front substrate of the display panel, so as to be able to detect a touch position.

### Background Art

In recent years, display devices with an attached touch panel have been widely used due to the prevalence of personal digital assistants (PDAs), palmtop computers, mobile gaming devices, and the like. Such display devices with an attached touch panel have a configuration in which a touch panel serving as an input unit is superimposed on a display panel such as a liquid crystal panel, and thus are configured such that input operations can be performed using the touch panel.

For example, with a liquid crystal display device with an attached touch panel, a transparent touch panel is stacked on an image display region of a liquid crystal panel, and images displayed on the liquid crystal panel can be viewed through the touch panel. Also, with this liquid crystal display with an attached touch panel, when the outer face of the touch panel, that is to say, the surface on the side for observing display images on the liquid crystal panel, is pressed by a user's finger or the like, that position is detected. This enables content input using the touch panel to be reflected in the control of the device, such as a PDA, that is being used.

With the display panel used in the above-described display device with an attached touch panel, images are displayed by the application of voltage to electrodes formed in pixels configuring the image display region. Also, a driving electrode terminal for connection to electrode wiring connected to the electrodes of the pixels is provided in a peripheral region outside the image display region of either the front substrate or the back substrate configuring the display panel. Signals for performing image display in the image display region, power supply voltage, and the like are supplied to the display panel from an external circuit such as a driving circuit formed on a circuit substrate external to the display panel, via a flexible printed circuit substrate (FPC) that is connected to the driving electrode terminal.

Also, the touch panel used in the above-described display device with an attached touch panel also needs to be provided with a signal output terminal for the transmission of position information acquired by detecting a touch position to an external circuit. This signal output terminal cannot be formed at a position overlapping the image display region of the display panel, and therefore needs to be provided in a portion on the touch panel that overlaps the peripheral region of the display panel.

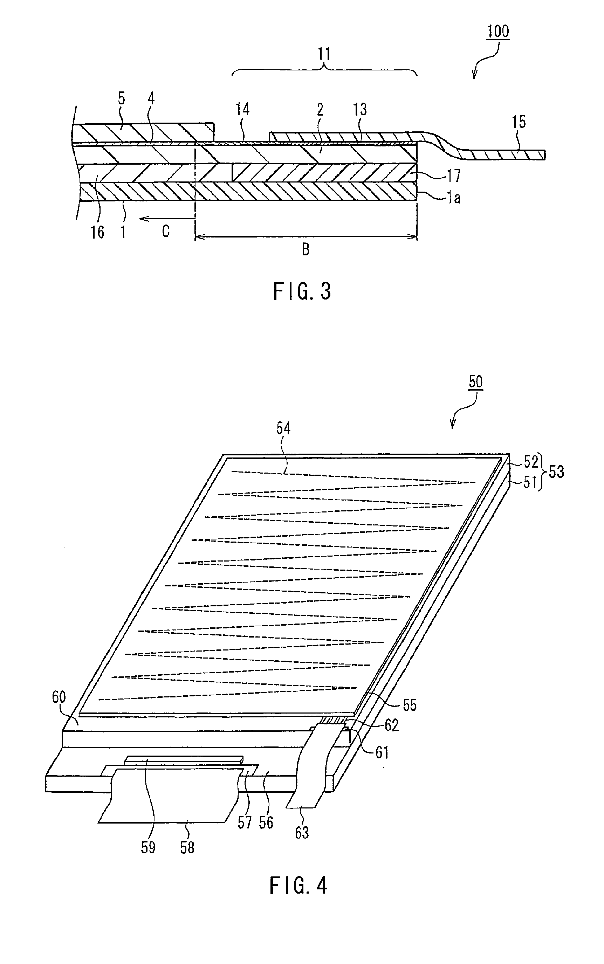

FIG. 4 is a perspective diagram showing the configuration of a conventional liquid crystal display device with an attached touch panel.

As shown in FIG. 4, a liquid crystal display device with an attached touch panel 50 includes a liquid crystal panel 53 having a back substrate 51 and a front substrate 52 that sandwich a liquid crystal layer (not shown), and a touch panel having a touch electrode 54 formed in a portion that overlaps the image display region of the liquid crystal panel 53 on the front substrate 52. Also, a pair of polarizing plates are disposed so as to sandwich the front substrate 52 and the back substrate 51 from the outside. Note that only a polarizing plate 55 on the observer side is shown in FIG. 4.

The back substrate 51 of the liquid crystal panel 53 is formed so as to be larger than the front substrate 52 in a plan view. In the liquid crystal panel 53, a driving electrode terminal 57 for the input of driving voltage and signals for image display to the liquid crystal panel 53 is formed in an exposed portion 56 of the back substrate 51 that is not covered by the front substrate 52. The driving electrode terminal 57 is connected to a circuit substrate having an external circuit formed thereon (not shown) via an FPC 58. Note that an IC chip 59 is disposed in the vicinity of the driving electrode terminal 57, and a driver circuit for displaying images on the liquid crystal panel 53, for example, is formed on the IC chip 59.

Regarding the surface of the front substrate 52 on the side opposite to the back substrate 51, a touch electrode 54 is formed in a portion of that surface that overlaps the image display region. Also, a signal output terminal 61 for connection to connection wiring 62 drawn from the touch electrode 54 is formed in a peripheral region 60 of the front substrate 52, the peripheral region 60 being a region in the periphery of a touch position detection region in which the touch electrode 54 is formed. An FPC 63 is connected to the signal output terminal 61. Accordingly, a touch position signal from the touch electrode 54 is output to an external circuit substrate (not shown) via the FPC 63.

With the liquid crystal display device with an attached touch panel 50 shown in FIG. 4, the portion of the exposed region 56 of the back substrate 51 in which the driving electrode terminal 57 is formed and the portion of the peripheral region 60 of the front substrate 52 in which the signal output terminal 61 is formed are ineffective regions that do not contribute to image display. However, there is demand for a reduction in the overall device size for mobile devices such as PDAs in particular. For this reason, there has been demand for frame width reduction for reducing the frame area, that is to say, the area of the ineffective region that does not contribute to image display in the display device.

To address this, a configuration has been proposed in which, in order to reduce the area of a peripheral region in which a touch electrode is not formed in a touch panel, an overhang portion that protrudes outward from one side of the touch panel is provided, and an FPC is bonded by thermo-compression to the overhang portion (see JP 2005-158008A).

### Disclosure of Invention

With the touch panel disclosed in JP 2005-158008A, it is possible to prevent the peripheral region for providing a connection portion for connection with the print substrate from being formed over the entirety of one side of the touch panel. However, it is necessary to cover the overhang portion through an innovation in the external shape of the mobile device in which the touch panel is incorporated. Particularly in the case of a display device with an attached touch panel, the frame area needs to be reduced in the state where the touch panel and the substantially rectangular display panel are stacked, and therefore even if the above-described overhang portion is provided, the ineffective region of the display panel cannot be reduced in size, and the frame area cannot be reduced. Accordingly, in the case of a display device with an attached touch panel, the configuration disclosed in JP 2005-158008A cannot be said to be an effective measure for reducing the frame area.

In view of this, an object of the present invention is to reduce the frame area in a display device with an attached touch panel in which a touch electrode is provided on a front substrate of a display panel, by raising the proportion of the image display region to the overall surface area of the display device.

A display device with an attached touch panel according to an embodiment of the present invention includes: a display panel that has a back substrate and a front substrate stacked on the back substrate such that a portion of the back substrate is exposed, a driving electrode terminal for connection with an external circuit being formed on the exposed portion of the back substrate that is not covered by the front substrate; and a touch electrode that is formed on the front substrate of the display panel and outputs a touch position signal in accordance with a touch position, wherein an extension portion is provided on the front substrate on one side of the driving electrode terminal, the extension portion extending toward a side of the back substrate where the driving electrode terminal is formed, and a signal output terminal for outputting the touch position signal obtained from the touch electrode to the external circuit is provided on the extension portion.

According to the present invention, the signal output terminal for outputting a touch position signal obtained from the touch electrode is formed in the peripheral region in which the driving electrode terminal is provided, thus enabling reducing the ineffective region outside the image display region. This enables reducing the frame area.

### Brief Description of Drawings

[FIG. 1] FIG. 1 is a perspective view of the schematic configuration of a liquid crystal display device with an attached touch panel according to an embodiment of the present invention.
[FIG. 2] FIG. 2 is a plan view of the positional relationship between a driving electrode terminal and a signal output terminal in the liquid crystal display device with an attached touch panel according to the embodiment of the present invention.
[FIG. 3] FIG. 3 is a cross-sectional view (cross-sectional view taken along line A-A' in FIG. 2) of the configuration of an extension portion of a front substrate in the liquid crystal display device with an attached touch panel according to the embodiment of the present invention.
[FIG. 4] FIG. 4 is a perspective view of the schematic configuration of a conventional liquid crystal display device with an attached touch panel.

### Description of the Invention

A display device with an attached touch panel according to an embodiment of the present invention includes: a display panel that has a back substrate and a front substrate stacked on the back substrate such that a portion of the back substrate is exposed, a driving electrode terminal for connection with an external circuit being formed on the exposed portion of the back substrate that is not covered by the front substrate; and a touch electrode that is formed on the front substrate of the display panel and outputs a touch position signal in accordance with a touch position, wherein an extension portion is provided on the front substrate on one side of the driving electrode terminal, the extension portion extending toward a side of the back substrate where the driving electrode terminal is formed, and a signal output terminal for outputting the touch position signal obtained from the touch electrode to the external circuit is provided on the extension portion (first configuration).

According to the above configuration, the signal output terminal that outputs the touch position detection signal obtained from the touch electrode is formed on the extension portion of the front substrate that is formed at a position in alignment with the driving electrode terminal in the vicinity of one side of the back substrate. For this reason, the peripheral region of the front substrate outside the position detection region overlaps with the peripheral region of the back substrate, and it is possible to reduce the overall frame area, which is the size of the ineffective region that does not contribute to image display, of the display device with an attached touch panel.

In the first configuration, it is preferable that a seal member is disposed between the extension portion of the front substrate and the back substrate (second configuration). In this way, the extension portion of the front substrate is fixed on the back substrate. Accordingly, even if pressing force is applied to the extension portion when an FPC for connection with an external circuit substrate is connected to the signal output terminal formed on the extension portion of the front substrate, it is possible to effectively avoid damage to the front substrate.

In the first or second configuration, it is preferable that a protruding region is provided on the front substrate so as to be aligned with the extension portion and the driving electrode terminal, the protruding region protruding toward the side of the back substrate where the driving electrode terminal is formed (third configuration). In this way, the bond between the front substrate and the back substrate can be made even stronger in the portion where the signal output terminal is not formed, and damage to the display panel can be prevented.

In any one of the first to third configurations, it is preferable that the display panel is a liquid crystal panel in which a liquid crystal layer is disposed between the front panel and the back panel (fourth configuration).

### Embodiment

The following describes an embodiment of the present invention with reference to the drawings.

Note that an example of the configuration of a liquid crystal display device with an attached touch panel used for image display in a PDA or the like is taken as an example of a display device with an attached touch panel in the following description of an embodiment. However, the following description is not intended to limit the configuration or application of the display device with an attached touch panel. The display device with an attached touch panel may be a cold-cathode display device that employs field emission or an organic or inorganic EL display, or a display device including any of various types of display panels such as a plasma display panel (PDP). Also, the display device with an attached touch panel is not limited to being applied to a mobile device such as a PDA, and can be used as any of various types of stationary display devices with an attached touch panel that include a touch panel as an input means, such as the display terminal of a cash dispenser or an image description system at a museum.

Also, the drawings that are referenced below show simplifications of, among the constituent members of the embodiment of the present invention, only relevant members that are necessary for describing the present invention. The display device of the present invention can therefore include arbitrary constituent members that are not shown in the referenced drawings. Furthermore, regarding the dimensions of the members in the drawings, the dimensions of the actual constituent members, the ratios of the dimensions of the members, and the like are not shown faithfully.

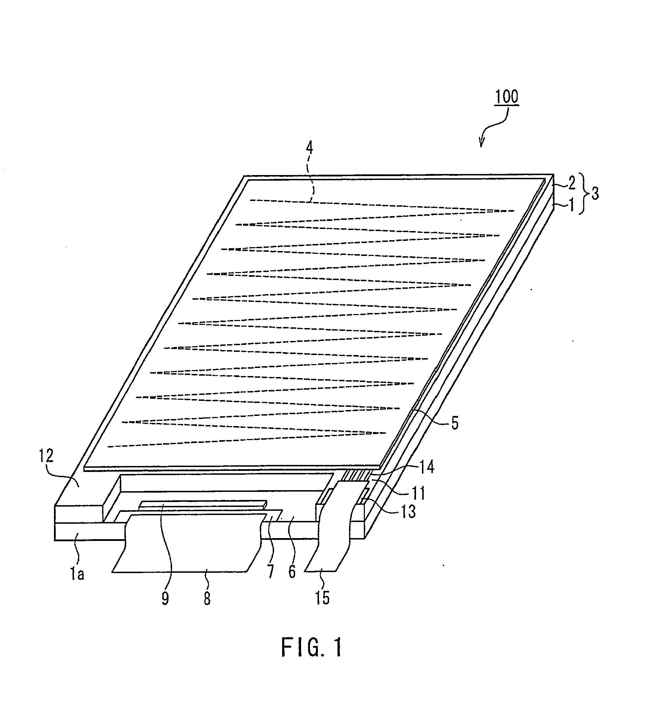

FIG. 1 is a perspective view of the overall configuration of a liquid crystal display device with an attached touch panel (display device with an attached touch panel) according to an embodiment of the present invention.

A liquid crystal display device with an attached touch panel 100 of the present embodiment has a liquid crystal panel 3 serving as a display panel, and a touch electrode 4 disposed on a front substrate 2 of the liquid crystal panel 3.

In the liquid crystal panel 3, a back substrate 1 made of glass and the front substrate 2, which is likewise made of glass, are disposed separated from each other with a predetermined gap, and a liquid crystal layer (not shown) is provided between the back substrate 1 and the front substrate 2.

A first polarizing plate 5 is disposed on the front side of the front substrate 2, and although not shown, a second polarizing plate is disposed on the back side of the back substrate 1. These polarizing plates forming a pair are disposed such that their polarization angles are substantially 90 degrees different from each other, for example.

Also, although also not shown, a backlight for emitting illumination light necessary for displaying images on the liquid crystal panel 3 is provided on the back side of the liquid crystal panel 3. The backlight of the liquid crystal display device with an attached touch panel 100 of the present embodiment is, for example, the so-called side light type or edge light type, and includes a flat plate shaped light guiding body and a light source such as a cold-cathode fluorescent tube or a light emitting diode provided on a side face of the light guiding body. With a side light type of backlight, light emitted from the light source is incident from the side face of the light guiding body, is then repeatedly reflected inside the light guiding body so as to propagate in a diffusive manner, and is then emitted as uniform light from the main face of the light guiding body on the side opposing the liquid crystal panel 3.

Note that the backlight of the liquid crystal display device 100 is not limited to being the side light type described above, and a so-called direct type of backlight may be used. A direct type of backlight has a configuration in which a light source is planarly disposed on the back face of the liquid crystal panel 3 so as to emit light toward the liquid crystal panel 3. Accordingly, light emitted from the light source is incident on the liquid crystal panel via optical sheets such as a converging sheet and a diffusing sheet. Also, the light source is not limited to being a cold-cathode fluorescent tube or a light emitting diode, and a hot-cathode fluorescent tube, an EL light emitter, or the like may be used.

Furthermore, the liquid crystal panel 3 is not limited to being a so-called transmissive or semi-transmissive type of liquid crystal panel in which illumination light from a backlight is used for image display, and it is possible to use a reflective liquid crystal panel in which external light that is incident after passing through the front substrate 2 is reflected by a reflecting electrode formed on the back substrate 1. In the case of a reflective liquid crystal panel, there is no need for the backlight or the polarizing plate disposed on the back side of the back substrate 1.

Provided on the side of the front substrate 2 opposing the back substrate 1 are color filters corresponding to pixels for color image display, and a counter electrode for applying a predetermined voltage to the liquid crystal layer.

On the side of the back substrate 1 opposing the front substrate 2, a plurality of pixel electrodes are disposed in a matrix so as to form a plurality of rows and a plurality of columns. Characters and images are displayed on the liquid crystal panel 3 by changing the oriented state of liquid crystal grains of the liquid crystal layer through adjusting the potential between the pixel electrodes and the counter electrode of the front substrate 2. The region of the back substrate 1 in which the pixel electrodes are formed is therefore the image display region of the liquid crystal panel 3.

Formed in the image display region of the back substrate 1 are a plurality of gate lines disposed aligned in the row direction of the pixel electrodes, a plurality of source lines disposed aligned in the column direction, and TFTs that are connected to the pixel electrodes and are positioned in the vicinity of intersections between the gate lines and source lines that are orthogonal to each other. With this configuration, the TFTs serving as switching elements are switched on and thus selected row-by-row by successively applying a gate voltage to the gate lines. Voltage necessary for image display is then applied to the pixel electrodes belonging to the selected row via the source lines. A detailed description of the internal structures of the back substrate 1 and the front substrate 2 will not be given since they are similar to those of a general liquid crystal panel.

Note that although the liquid crystal panel 3 is described as being capable of displaying color images above, the display panel of the display device with an attached touch panel is not limited to performing color display, and may perform monochromatic display. Also, a so-called active matrix liquid crystal panel in which driving of the pixel electrodes formed on the back substrate 1 is performed using TFTs serving as switching elements is described above. However, the method for driving the liquid crystal panel serving as the display panel of the display device with an attached touch panel is not limited to active matrix driving, and may be simple matrix driving or another driving method such as the IPS system in which an electric field is applied in the horizontal direction to the liquid crystal layer.

As shown in FIG. 1, the back substrate 1 of the liquid crystal panel 3 has a slightly larger surface area than that of the front substrate 2 in a plan view. Also, the back substrate 1 has an exposed portion 6 on one side of the liquid crystal panel 3 where the back substrate 1 is not covered by the front substrate 2. A driving electrode terminal 7 for connection to lead lines (not shown) that are drawn out from the gate lines and source lines formed in the image display region is provided in the exposed portion 6 of the back substrate 1.

As shown in FIG. 1, with the liquid crystal panel 3 of the present embodiment, the front substrate 2 is provided with an extension portion 11, which will be described later, that extends toward a side 1a where the driving electrode terminal 7 of the back substrate 1 is formed, and a protruding region portion 12 that likewise protrudes toward the side la. For this reason, with the liquid crystal panel 3 of the present embodiment, the exposed region 6 of the back substrate 1 that is not covered by the front substrate 2 is formed only in the central portion of the side 1a where the driving electrode terminal 7 of the back substrate 1 is formed.

The driving electrode terminal 7 is connected to an FPC 8 and is supplied with various types of signals for displaying images on the liquid crystal panel 3 and a power source potential for operating the liquid crystal panel 3 from an external circuit (not shown). Note that the means for connecting the external circuit and the driving electrode terminal 7 of the back substrate 1 is not limited to being the above-described FPC, and another connecting means for connection with a circuit substrate, such as a connector, can be used.

The liquid crystal display panel 3 of the present embodiment shown in FIG. 1 is a COG (Chip On Glass) type of panel in which a semiconductor element 9 such as an IC chip for driving the liquid crystal panel 3 is disposed in the exposed region 6 of the back substrate 1. However, a panel having another configuration may be used. For example, it is possible to employ TCP (Tape Carrier Package) technology in which circuit elements such as a semiconductor element and a capacitor for driving the liquid crystal panel 3 are mounted on the FPC 8.

A touch electrode 4 for detecting a touch position is formed by a transparent conductive film of ITO (Indium Tin Oxide) or the like on the face of the front substrate 2 that is opposite to the back substrate 1. Various types of patterns can be used for the touch electrode 4, such as a touch electrode that is rectangular in a plan view so as to cover the entire image display face of the liquid crystal panel 3, or a plurality of strip-shaped electrodes that are disposed at a predetermined interval. The region of the front substrate 2 in which the touch electrode 4 is provided is a position detection region having a position detection function as the touch panel.

As will be described in detail later, a signal output terminal 13 for connection with lead lines 14 drawn out from the touch electrode 4 formed in the position detection region is formed on the extension portion 11 that the front substrate 2 is provided with. Also, a touch position signal expressed by a voltage value or the like of the touch electrode 4 is output to an external circuit substrate (not shown) via an FPC 15 connected to the signal output terminal 13. In this case as well, a connecting means other than an FPC, such as a connector, can needless to say be used as the means for connecting the signal output terminal 13 and the external circuit.

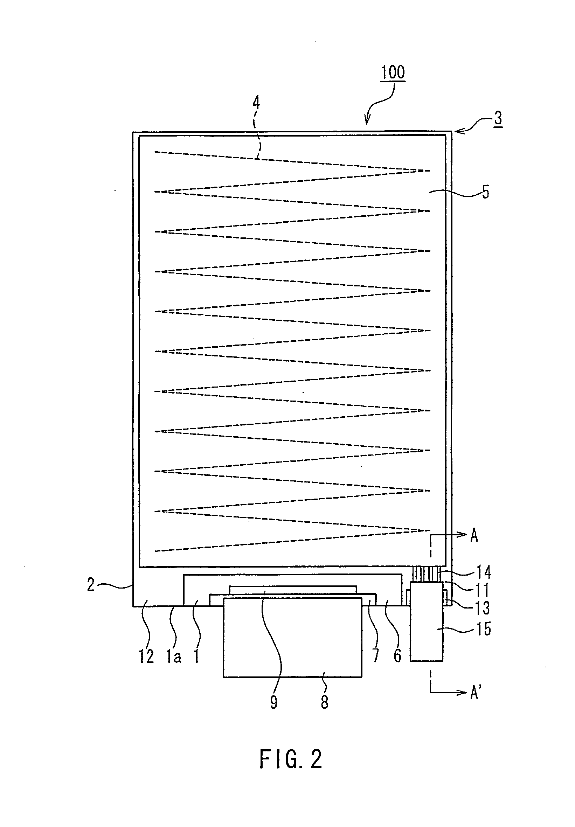

Next, the configuration of the extension portion 11 formed on the front substrate 2 of the liquid crystal display device with an attached touch panel 100 of the present embodiment will be described in greater detail with reference to FIG. 2, which is a plan view of the configuration, and FIG. 3, which is a cross-sectional view of the configuration.

As shown in FIG. 2, in the liquid crystal display device with an attached touch panel 100, the touch electrode 4, which is a transparent electrode, is formed on the front substrate 2 of the liquid crystal panel 3. As previously described, the back substrate 1 is formed so as to have a larger surface area than the front substrate 2 so as to form the exposed region 6 where the back substrate 1 is not covered by the front substrate 2 on the side 1a side (the side positioned at the bottom in FIG. 2). The driving electrode terminal 7 for connection with the connection wiring (not shown) drawn out from the image display region of the liquid crystal panel 3 is formed in the exposed region 6 of the back substrate 1. The FPC 8 is connected to the driving electrode terminal 7, and the driving electrode terminal 7 is supplied with a power supply voltage and display signals for display images on the liquid crystal panel 3 from an external circuit (not shown) via the FPC 8.

As previously described, the extension portion 11 is formed on the front substrate 2 on one side (the right side in FIG. 2) of the exposed region 6 of the back substrate 1, and the extension portion 11 extends toward the side 1a where the driving electrode terminal 7 of the back substrate 1 is formed. Also, formed on the extension portion 11 are the connection lines 14 connected to the touch electrode 4 formed on the front substrate 2, and the signal output terminal 13 to which the connection lines 14 are connected. The FPC 15 is connected to the signal output terminal 13. Accordingly, a touch position signal expressed as, for example, voltage fluctuation of the touch electrode 4 is output to the external circuit substrate (not shown) via the FPC 15.

In this way, providing the signal output terminal 13 on the extension portion 11 enables the peripheral region outside the image display region of the back substrate 1, which is necessarily formed in order to form the driving electrode terminal 7 of the liquid crystal panel 3, to be effectively utilized as a region for forming the signal output terminal 13.

This enables preventing the ineffective region that does not contribute to image display from being formed over a wide range as with the conventional liquid crystal display device with an attached touch panel 50 shown in FIG. 4. Specifically, it is possible to avoid the formation of both the exposed region 56, which is for forming the driving electrode terminal 57, and the peripheral region 60, which is for forming the signal output terminal 61 for outputting the touch position signal detected by the touch electrode 54 on the front substrate 52, in the liquid crystal panel.

The liquid crystal display device with an attached touch panel 100 of the present embodiment therefore can raise the proportion of the image display region to the surface area of the back substrate 1, and can reduce the frame area, which is the area of the ineffective region that does not contribute to image display.

Also, with the liquid crystal display device with an attached touch panel 100 of the present embodiment, the protruding region 12 that protrudes toward the side 1a of the back substrate 1 is formed on the front substrate 2 on one side (the left side in FIG. 2) of the exposed region 6 of the back substrate 1 that is opposite to the extension portion 11. Providing the protruding region 12 in this way enables increasing the size of the portion where the front substrate 2 and the back substrate 1 are bonded, thus enabling improving the strength of the liquid crystal panel 3.

FIG. 3 is a cross-sectional view of the configuration of the extension portion 11 of the front substrate 2 in the liquid crystal display device with an attached touch panel 100 of the present embodiment. Specifically, FIG. 3 shows a cross section taken along line A-A' in FIG. 2, which is a plan view of the configuration.

As shown in FIG. 3, with the liquid crystal display device with an attached touch panel 100, a seal member 17 is disposed between the back substrate 1 and the front substrate 2 in the portion corresponding to the extension portion 11 of the front substrate 2. As a result, even in the case where pressing force is applied in the downward direction in FIG. 3 when the FPC 15 is compression-bonded to the signal output terminal 13 formed on the extension portion 11 of the front substrate 2, the seal member 17 can alleviate the situation in which stress is concentrated on the extension portion 11 of the front substrate 2. Specifically, in the case where the liquid crystal layer exists between the back substrate 1 and the front substrate 2 in the extension portion 11, when the FPC 15 is compression-bonded to the signal output terminal 13, the gap between the back substrate 1 and the front substrate 2 changes, and the back substrate 1 and the front substrate 2 undergo deformation. To address this, providing the seal member 17 that does not become displaced very much even when subjected to pressure so as to be sandwiched between the back substrate 1 and the front substrate 2 as described above enables preventing the gap between the front substrate 2 and the back substrate 1 from changing when the compression-bonding is performed. This enables alleviating the situation in which stress is concentrated on the extension portion 11 of the front substrate 2. Therefore, according to the above-described configuration, it is possible to prevent the appearance of cracks in and damage to the extension portion 11 of the front substrate 2 when compression-bonding is performed.

Note that the seal member 17 disposed between the extension portion 11 and the back substrate 1 is disposed in the peripheral region portion that surrounds the image display region in the liquid crystal panel 3. The seal member 17 may be configured by the seal member fixed in the state in which the liquid crystal layer 16 is sandwiched between the back substrate 1 and the front substrate 2 being extended to the extension portion 11, or may be provided separately from the above seal member that surrounds the liquid crystal layer 16.

As shown in FIG. 3, the end portion of the connection wiring 14 connected to the touch electrode 4 formed on the face of the front substrate 2 that is opposite to the back substrate 1 is connected to the signal output terminal 13. Note that the region indicated by B in FIG. 3 is the peripheral region of the liquid crystal panel 3 in which image display is not performed, and the region indicated by C in FIG. 3 is the image display region of the liquid crystal panel 3. As can be seen in FIG. 3, according to the present embodiment, the FPC 15 is compression-bonded to the signal output terminal 13 at a position separated from the image display region, thus enabling suppressing the situation in which the image display region is subjected to the influence of force and heat when compression-bonding is performed.

As described above, with the liquid crystal display device with an attached touch panel 100 of the present embodiment, in the liquid crystal panel 3, the signal output terminal 13 for connection to the lead lines 14 drawn out from the touch electrode 4 is formed so as to be aligned with the exposed region 6 of the back substrate 1 in which the driving electrode terminal 7 is formed. For this reason, the peripheral region that is not a display region and is for the formation of the driving electrode terminal 7 can be effectively utilized as a portion for forming the signal output terminal 13 for outputting a touch position signal from the touch electrode 4. This enables reducing the proportion of the frame area, which is the area of the ineffective region that is outside the image display region, to the surface area of the back substrate 1.

Moreover, since the protruding region 12 is provided on the front substrate 2 on the side opposite to the extension portion 11 with the exposed region 6 of the back substrate 1 therebetween, the strength of the liquid crystal panel 3 having the front substrate 2 and the back substrate 1 is improved.

Note that although the example of forming the driving electrode terminal only in the vicinity of one side of the back substrate is described in the present embodiment, the display device with an attached touch panel of the present invention is not limited to this configuration, and a configuration is possible in which the driving electrode terminal is formed in the vicinity of two or more sides of the back substrate. In this case, it is sufficient that the signal output terminal connected to the touch electrode via the lead lines is formed on at least one or more sides among the sides of the back substrate at which the driving electrode terminal is formed.

Furthermore, the example where the driving electrode terminal formed in the vicinity of one side of the back substrate is disposed in the central portion of that side is described in the present embodiment. However, the display device with an attached touch panel of the present invention is not limited to this configuration, and a configuration is possible in which the driving electrode terminal is formed on either the left or right end portion of the side of the back substrate. Also, two or more driving electrode terminals may be formed aligned with each other in the vicinity of one side of the back substrate. In these cases as well, the driving electrode terminals may be provided at arbitrary positions, such as in the central portion of the side of the back substrate, as long as the extension portion of the front substrate is at a position adjacent to the exposed portion in which the driving electrode terminals are formed.

### Industrial Applicability

The present invention is applicable as a display device with an attached touch panel with which an operation for inputting information corresponding to a display image can be performed using a touch electrode formed on a front substrate of a display panel.

## Claims

1. A display device with an attached touch panel comprising:
a display panel that has a back substrate and a front substrate stacked on the back substrate such that a portion of the back substrate is exposed, a driving electrode terminal for connection with an external circuit being formed on the exposed portion of the back substrate that is not covered by the front substrate; and
a touch electrode that is formed on the front substrate of the display panel and outputs a touch position signal in accordance with a touch position,
wherein an extension portion is provided on the front substrate on one side of the driving electrode terminal, the extension portion extending toward a side of the back substrate where the driving electrode terminal is formed, and
a signal output terminal for outputting the touch position signal obtained from the touch electrode to the external circuit is provided on the extension portion.

2. The display device with an attached touch panel according to claim 1, wherein a seal member is disposed between the extension portion of the front substrate and the back substrate.

3. The display device with an attached touch panel according to claim 1 or 2, wherein a protruding region is provided on the front substrate so as to be aligned with the extension portion and the driving electrode terminal, the protruding region protruding toward the side of the back substrate where the driving electrode terminal is formed.

4. The display device with an attached touch panel according to any one of claims 1 to 3, wherein the display panel is a liquid crystal panel in which a liquid crystal layer is disposed between the front panel and the back panel.
